# EUROPÄISCHE PATENTSCHRIFT

(11) **EP 1 045 619 B1**
(45) Veröffentlichungstag und Bekanntmachung des Hinweises auf die Patenterteilung: **14.08.2002**
(21) Anmeldenummer: 00103611.0
(22) Anmeldetag: 21.02.2000
(51) Int. Cl.: H05B 41/00

(54) **Abgleichsverfahren von Betriebsparameter eines Lampen-Vorschaltsgeräts**
Calibration method of operating parameters of a lamp ballast
Procédé de calibration des paramètres d'opération d'un ballast pour lampe

(30) Priorität: 16.04.1999 DE 19917365
(43) Veröffentlichungstag der Anmeldung: 18.10.2000
(73) Patentinhaber: Patent-Treuhand-Gesellschaft für elektrische Glühlampen mbH, 81543 München (DE)
(72) Erfinder: Huber, Andreas, 83301 Traunreut (DE)

(56) Entgegenhaltungen:
- WO-A-97/29618
- US-A- 5 414 325

## Beschreibung

Die Erfindung betrifft ein Verfahren zum Abgleich mindestens eines Betriebsparameters eines Betriebsgerätes für elektrische Lampen gemäß dem Oberbegriff des Patentanspruchs 1.

### I. Technisches Gebiet

Es ist eine bekannte Tatsache, daß identisch gefertigte Betriebsgeräte für elektrische Lampen, aufgrund der Toleranzen ihrer einzelnen Komponenten, unterschiedliche Betriebsparameter, insbesondere unterschiedliche Ausgangsspannungen oder Ausgangsleistungen aufweisen können. Bei der Fertigung von Betriebsgeräten für elektrische Lampen muß daher sichergestellt werden, daß die an das Betriebsgerät anzuschließenden Lampen auch tatsächlich mit ihren Nenndaten betrieben werden. Zu diesem Zweck wird ein Abgleichsverfahren durchgeführt, bei dem einer oder mehrere Betriebsparameter der Betriebsgeräte abgeglichen werden, so daß die an die Betriebsgeräte angeschlossenen Lampen mit ihren Nenndaten betrieben werden können.

Beispielsweise wird zum Abgleich des Betriebsgerätes ein geeignet dimensionierter Widerstand in das Betriebsgerät eingelötet. Der Wert dieses Abgleichswiderstandes wird während des Abgleichsverfahrens für jedes Betriebsgerät individuell ermittelt. Dieser Abgleichswiderstand gewährleistet, daß die an das Betriebsgerät angeschlossenen Lampen mit ihren Nenndaten betrieben werden. Eine andere Möglichkeit besteht darin, in das Betriebsgerät ein Potentiometer einzubauen, das während des Abgleichsverfahrens auf den geeigneten Wert eingestellt wird.

Die internationale Patentanmeldung WO-A-97/29618 offenbart eine Dimmvorrichtung für ein Beleuchtungssystem bestehend aus einer Leuchtstofflampe und einem Vorschaltgerät. Mittels eines Mikroprozessors wird ein Kalibrierverfahren durchgeführt, bei dem der Phasenwinkel zwischen 0 Grad und 180 Grad variiert wird und der entsprechende Strom durch das Beleuchtungssystem überwacht wird.

### II. Darstellung der Erfindung

Es ist die Aufgabe der Erfindung, ein verbessertes Verfahren zum Abgleich mindestens eines Betriebsparameters eines Betriebsgerätes für elektrische Lampen bereitzustellen, bei dem kein individuell auf das jeweilige Betriebsgerät abgestimmter Abgleichswiderstand benötigt wird.

Diese Aufgabe wird erfindungsgemäß durch die kennzeichnenden Merkmale des Patentanspruchs 1 gelöst. Besonders vorteilhafte Ausführungen der Erfindung sind in den Unteransprüchen beschrieben.

Während des erfindungsgemäßen Abgleichsverfahrens wird zum Abgleich mindestens eines Betriebsparameters des Betriebsgerätes in einer Regelschleife mindestens ein im Betriebsgerät gespeicherter, die Ansteuerung des Spannungswandlers bestimmender Ansteuerungsparameter sukzessive verändert und bei jedem Durchlauf der Regelschleife ein Soll-Istwertvergleich des mindestens einen abzugleichenden Betriebsparameters durchgeführt. Die Regelschleife wird erst verlassen, wenn der Istwert des mindestens einen Betriebsparameters von seinem Sollwert um nicht mehr als einen vorgegebenen Betrag abweicht. Zu diesem Zweck weist das Abgleichsverfahren folgende Verfahrensschritte auf:
a) Senden wenigstens eines Steuerbefehls an das Betriebsgerät, der das Betriebsgerät veranlaßt, einen bestimmten Betriebszustand einzustellen, und der das Abgleichsverfahren für den mindestens einen Betriebsparameter startet,
b) Erfassen des Istwertes des mindestens einen Betriebsparameters,
c) Vergleichen des Istwertes des mindestens einen Betriebsparameters mit einem vorgegebenen Sollwert des mindestens einen Betriebsparameters,
d) Ermitteln und Speichern eines von dem Soll-Istwertvergleich abhängigen Korrekturwertes oder Sollwertes für mindestens einen im Betriebsgerät gespeicherten, die Ansteuerung des Spannungswandlers bestimmenden Ansteuerungsparameters,
e) Ansteuerung des Spannungswandlers unter Verwendung des ermittelten und im Betriebsgerät gespeicherten Korrekturwertes oder Sollwertes des Ansteuerungsparameters,

Erfindungsgemäß wird während des Verfahrens das Betriebgerät mit einer in den Lastkreis geschalteten, an den Anschlüssen angeschlossenen, kalibrierten Last betrieben, und die Schritte b) bis e) werden wiederholt, falls der Istwert des mindestens einen Betriebsparameters von seinem Sollwert um mehr als einen vorgegebenen Betrag abweicht.

Bei dem mindestens einen abzugleichenden Betriebsparameter des Betriebsgerätes handelt es sich vorteilhafterweise um die Ausgangsspannung oder die Ausgangsleistung des Betriebsgerätes, da diese einen unmittelbaren Einfluß auf den Betrieb der an das Betriebsgerät angeschlossenen Lampen haben. Das erfindungsgemäße Abgleichsverfahren wird mit Hilfe einer externen Prozeßsteuerungsvorrichtung ausgeführt, die Bestandteil einer Fertigungseinrichtung, insbesondere einer Prüfvorrichtung für Betriebsgeräte ist, und die vorteilhafterweise über eine externe Schnittstelle des Betriebsgerätes während des Abgleichverfahrens mit dem im Betriebsgerät angeordneten, der Ansteuerung des Spannungswandlers dienenden Mikrocontroller verbunden ist, um Steuerbefehle für das Betriebsgerät zur Einstellung des gewünschten Betriebszustandes zu erzeugen.

### III. Beschreibung der bevorzugten Ausführungsbeispiele

Nachstehend wird die Erfindung anhand mehrerer bevorzugter Ausführungsbeispiele näher erläutert. Es zeigen:

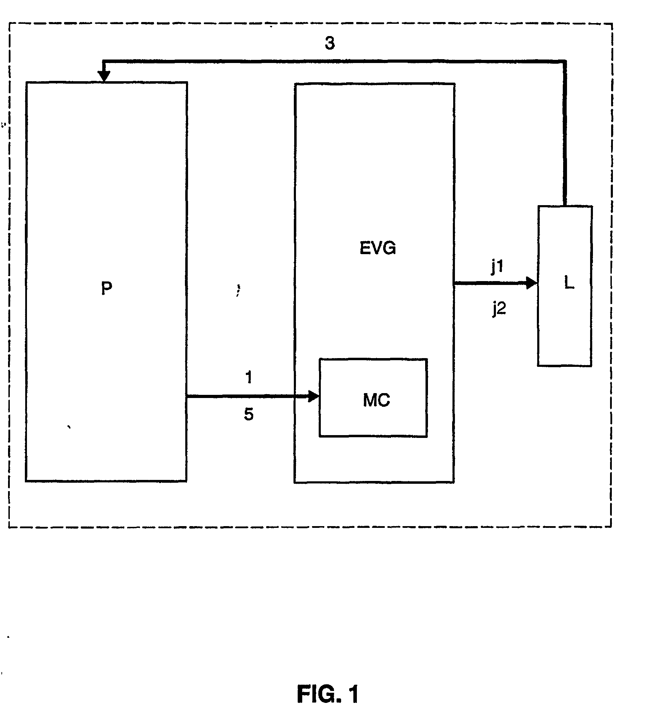

- Figur 1: eine schematische Darstellung des Abgleichsverfahrens gemäß des ersten Ausführungsbeispiels der Erfindung

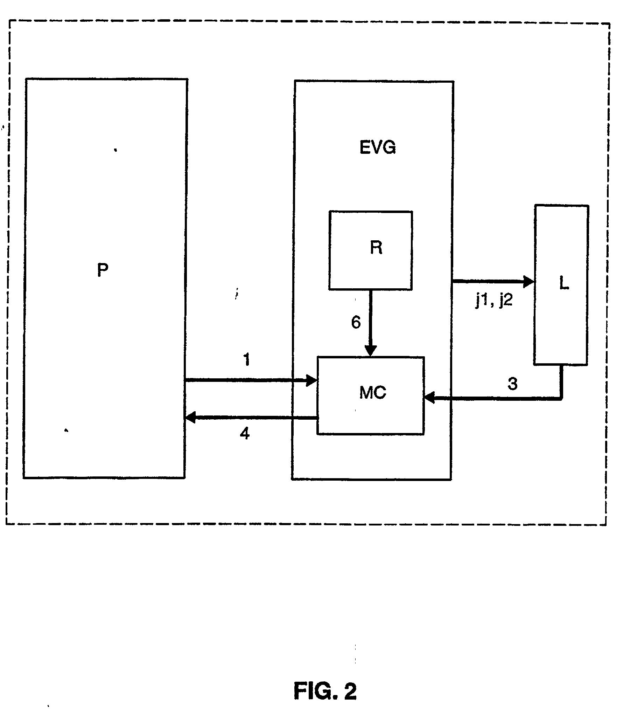

- Figur 2: eine schematische Darstellung des Abgleichsverfahrens gemäß des zweiten Ausführungsbeispiels der Erfindung
- Figur 3: eine schematische Darstellung eines Betriebsgerätes für eine Niederdruckentladungslampe

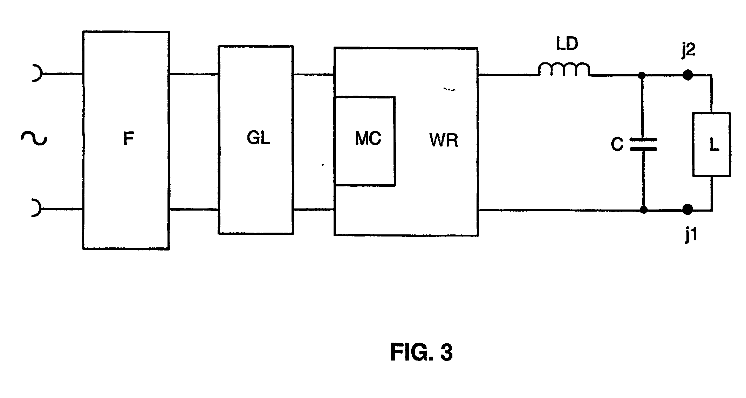

Die bevorzugten Ausführungsbeispiele des erfindungsgemäßen Abgleichverfahrens werden anhand eines Elektronischen Vorschaltgerätes EVG, das zum Betrieb von Niederdruckentladungslampen, insbesondere von Leuchtstofflampen dient, beschrieben. Der Aufbau eines derartigen Betriebsgerätes EVG ist schematisch in der Figur 3 abgebildet. Es besitzt einen Netzspannungseingang, ein Hochfrequenzfilter F, einen Netzspannungsgleichrichter GL, einen als Wechselrichter, insbesondere als Halbbrückenwechselrichter ausgebildeten Spannungswandler WR, einen als Serienresonanzkreis ausgeführten, dem Spannungswandler WR nachgeschalteten Lastkreis LD, C, einen Mikrocontroller MC zur Ansteuerung des Spannungswandlers WR und Anschlüsse j1, j2 für mindestens eine Niederdruckentladungslampe. Das Betriebsgerät EVG weist ferner eine serielle externe Schnittstelle (in Figur 3 nicht abgebildet) zum Empfangen von Steuerbefehlen von einer zentralen Steuervorrichtung eines Beleuchtungssystems bzw. zum Senden von Rückmeldungssignalen an die zentrale Steuervorrichtung auf. Während des erfindungsgemäßen Abgleichsverfahrens ist das Betriebsgerät EVG über seine externe Schnittstelle nicht mit einer zentralen Steuervorrichtung eines Beleuchtungssystems, sondern stattdessen mit einer externen Prozeßsteuerungsvorrichtung P eines zur Fertigungslinie des Betriebsgerätes gehörenden Prüfstandes verbunden.

Beiden nachstehend näher beschriebenen Ausführungsbeispielen des erfindungsgemäßen Abgleichsverfahren ist gemeinsam, daß zu Beginn des Abgleichsverfahrens anstelle der Niederdruckentladungslampe in den Lastkreis LD, C ein an die Anschlüsse j1, j2 des Betriebsgerätes EVG angeschlossener, kalibrierter Widerstand L geschaltet wird, der bei einem vorgegebenen Betriebszustand einen Ersatzwiderstand für die Niederdruckentladungslampe darstellt. Mit Hilfe der externen Prozeßsteuerungsvorrichtung P, die über die externe Schnittstelle des Betriebsgerätes EVG mit dem Mikrocontroller MC verbunden ist, wird das Betriebsgerät EVG mit Steuerbefehlen 1 beaufschlagt, die das Betriebsgerät EVG veranlassen, den gewünschten Betriebszustand einzustellen und die, zumindest beim zweiten. Ausführungsbeispiel, dem Betriebsgerät EVG den Start des Abgleichsverfahrens mitteilen.

Gemäß des ersten Ausführungsbeispiels des erfindungsgemäßen Abgleichsverfahrens wird der Istwert 3 des mindestens einen Betriebsparameters des Betriebsgerätes EVG von der externen Prozeßsteuerungsvorrichtung P erfaßt und mit einem von der externen Prozeßsteuerungsvorrichtung P bereitgestellten Sollwert verglichen. In Abhängigkeit von dem vorgenannten Soll-Istwertvergleich des mindestens einen Betriebsparameters ermittelt die externe Prozeßsteuerungsvorrichtung P mit Hilfe eines implementierten Computerprogramms einen Korrekturwert 5 für mindestens einen im Betriebsgerät EVG gespeicherten, die Ansteuerung des Spannungswandlers WR bestimmenden Ansteuerungsparameter. Der Korrekturwert 5 des mindestens einen Ansteuerungsparameters wird über die externe, serielle Schnittstelle des Betriebsgerätes EVG von der externen Prozeßsteuerungsvorrichtung P an den Mikrocontroller MC übertragen und in einem nicht-flüchtigen Speicher des Betriebgerätes EVG gespeichert. Der Mikrocontroller MC verwendet den Korrekturwert 5 des mindestens einen Ansteuerungsparameters zur weiteren, korrigierten Ansteuerung des Spannungswandlers WR. Der mindestens eine Ansteuerungsparameter beeinflußt, beispielsweise über die Taktfrequenz oder über die Versorgungsspannung des als Wechselrichter ausgebildeten Spannungswandlers WR, den am Ersatzwiderstand L gemessenen Istwert 3 des mindestens einen Betriebsparameters des Betriebsgerätes. Die Korrektur des mindestens einen Ansteuerungsparameters erfolgt mittels des in der Prozeßsteuerungsvorrichtung P implementierten Computerprogramms derart, daß der neue Istwert des mindestens einen Betriebsparameters eine geringere Abweichung von seinem Sollwert besitzt als der zuvor gemessene Istwert. Solange wie der Soll-Istwertvergleich des mindestens einen Betriebsparameters eine Abweichung des Istwertes von seinem Sollwert um mehr als einen vorgegebenen Betrag ergibt, wird die Korrektur des Ansteuerungsparameters gemäß der oben angegebenen Verfahrensschritte c) bis f) wiederholt.

Gemäß des zweiten Ausführungsbeispiels des erfindungsgemäßen Abgleichsverfahrens wird der Soll-Istwertvergleich des mindestens einen Betriebsparameters mit Hilfe eines im Mikrocontroller implementierten Programms durchgeführt. Die Prozeßsteuerungsvorrichtung P dient bei diesem Ausführungsbeispiel nur dazu, durch Senden von geeigneten Steuerbefehlen 1 das Betriebsgerät EVG zur Einstellung des gewünschten Betriebszustandes zu veranlassen und dem Betriebsgerät EVG den Beginn des Abgleichsverfahrens mitzuteilen. Der Istwert 3 des mindestens einen Betriebsparameters wird dem Mikrocontroller MC zugeführt. Zur Durchführung des Soll-Istwertvergleichs ruft der Mikrocontroller MC den im Speicher R des Betriebsgerätes EVG gespeicherten Sollwert 6 des mindestens einen Betriebsparameters ab.

In Abhängigkeit von dem Ergebnis des vorgenannten Soll-Istwertvergleichs wird mit Hilfe des im Mikrocontroller MC implementierten Programms ein Korrekturwert für mindestens einen, die Ansteuerung des Spannungswandlers WR bestimmenden Ansteuerungsparameter ermittelt. Wie bereits oben erläutert, beeinflußt dieser Ansteuerungsparameter den zu messenden Istwert 3 des mindestens einen Betriebsparameters. In einer vom Programm des Mikrocontrollers MC gesteuerten Regelschleife wird der Ansteuerungsparameter gemäß der oben erwähnten Verfahrenschritte c) bis f) sukzessiv solange verändert, bis der Soll-Istwertvergleich des mindestens einen Betriebsparameters eine ausreichende Übereinstimmung zwischen Sollwert 6 und Istwert 3 ergibt. In diesem Fall sendet der Mikrocontroller MC zur Beendigung des Abgleichsverfahrens ein Rückmeldungssignal 4 an die externe Prozeßsteuerungsvorrichtung P.

Besonders vorteilhaft läßt sich das erfindungsgemäße Abgleichsverfahren auf ein dimmbares Elektronisches Vorschaltgerät EVG für Leuchtstofflampen zum Abgleich der Ausgangsleistung oder der Ausgangsspannung des Betriebsgerätes für die beiden Betriebszuständen anwenden, die der höchsten Dimmstufe (maximale Helligkeit der Lampe) und der niedrigsten Dimmstufe (minimale Helligkeit der Lampe) des Betriebsgerätes entsprechen. Zum Abgleich der an den Anschlüssen j1, j2 bereitgestellten Ausgangsleistung bzw. Ausgangsspannung für den der niedrigsten Dimmstufe der Lampe entsprechenden Betriebszustand wird an die Anschlüsse j1, 2 ein Widerstand L angeschlossen, der einen Ersatzwiderstand für die Lampe im Zustand der niedrigsten Dimmstufe des Betriebsgerätes (minimaler Helligkeit der Lampe) darstellt. Die externe Prozeßsteuerungsvorrichtung P sendet über die externe serielle Schnittstelle des Betriebsgerätes EVG ein Steuersignal 1 an den Mikrocontroller MC, das das Betriebsgerät EVG veranlaßt, den der niedrigsten Dimmstufe entsprechenden Betriebszustand einzustellen. Danach wird gemäß eines der beiden oben beschriebenen Ausführungsbeispiele ein erster, die Ansteuerung des Spannungswandlers WR beeinflußender Ansteuerungsparameter mittels der oben erläuterten Regelschleife sukzessive korrigiert, bis die Ausgangsleistung bzw. die Ausgangsspannung des Betriebsgerätes bei niedrigster Dimmstufe mit ihrem Sollwert hinreichend übereinstimmt.

Anschließend wird das Abgleichsverfahren für die Ausgangsleistung bzw. Ausgangsspannung bei höchster Dimmstufe wiederholt. Zu diesem Zweck wird an die Anschlüsse j1, j2 ein Widerstand L angeschlossen, der einen Ersatzwiderstand der Lampe bei höchster Dimmstufe (maximale Helligkeit der Lampe) darstellt. Die externe Prozeßsteuerungsvorrichtung P sendet über die externe serielle Schnittstelle des Betriebsgerätes EVG ein Steuersignal 1 an den Mikrocontroller MC, das das Betriebsgerät EVG veranlaßt, den der höchsten Dimmstufe entsprechenden Betriebszustand einzustellen. Danach wird gemäß eines der beiden oben beschriebenen Ausführungsbeispiele ein zweiter, die Ansteuerung des Spannungswandlers WR beeinflußender Ansteuerungsparameter mittels der oben erläuterten Regelschleife sukzessive korrigiert, bis die Ausgangsleistung bzw. die Ausgangsspannung des Betriebsgerätes bei höchster Dimmstufe mit ihrem Sollwert hinreichend übereinstimmt. Der erste und zweite Ansteuerungsparameter bestimmen den unteren und oberen Grenzwert des vom Mikrocontroller MC für den Spannungswandler WR generierten Ansteuerungssignals und legen daher auch den Regelungsbereich des Spannungswandlers WR fest.

## Patentansprüche

1. Verfahren zum Abgleich mindestens eines Betriebsparameters eines Betriebsgerätes für elektrische Lampen, wobei das Betriebsgerät (EVG) einen Spannungswandler (WR) mit mindestens einem daran angeschlossenen Lastkreis (LD, C), einen Mikrocontroller (MC) zur Ansteuerung des Spannungswandlers (WR) und Anschlüsse (j1, j2) für mindestens eine Lampe aufweist, und wobei das Verfahren folgende Schritte aufweist:
a) Senden wenigstens eines Steuerbefehls (1) an das Betriebsgerät (EVG), der das Betriebsgerät (EVG) veranlaßt, einen bestimmten Betriebszustand einzustellen, und der das Abgleichsverfahren für den mindestens einen Betriebsparameter startet,
b) Erfassen des Istwertes (3) des mindestens einen Betriebsparameters,
c) Vergleichen des Istwertes (3) des mindestens einen Betriebsparameters mit einem vorgegebenen Sollwert (6) des mindestens einen Betriebsparameters,
d) Ermitteln und Speichern eines von dem Soll-Istwertvergleich abhängigen Korrekturwertes oder Sollwertes (5) für mindestens einen im Betriebsgerät gespeicherten, die Ansteuerung des Spannungswandlers (WR) bestimmenden Ansteuerungsparameters,
e) Ansteuerung des Spannungswandlers (WR) unter Verwendung des ermittelten und im Betriebsgerät (EVG) gespeicherten Korrekturwertes oder Sollwertes (5) des Ansteuerungsparameters,
**dadurch gekennzeichnet, daß** während des Verfahrens das Betriebgerät (EVG) mit einer in den Lastkreis (LD, C) geschalteten, an den Anschlüssen (j1, j2) angeschlossenen, kalibrierten Last betrieben wird, und die Schritte b) bis e) wiederholt werden, falls der Istwert (3) des mindestens einen Betriebsparameters von seinem Sollwert (6) um mehr als einen vorgegebenen Betrag abweicht.

2. Verfahren nach Anspruch 1, **dadurch gekennzeichnet, daß** der mindestens eine Betriebsparameter die an den Anschlüssen (j1, j2) des Betriebsgerätes (EVG) bereitgestellte Ausgangsspannung oder Ausgangsleistung ist.

3. Verfahren nach Anspruch 1, **dadurch gekennzeichnet, daß** das Verfahren mit Hilfe einer externen Prozeßsteuerungsvorrichtung (P) durchgeführt wird, die während des Abgleichverfahrens über eine externe Schnittstelle des Betriebsgerätes (EVG) mit dem Mikrocontroller (MC) verbunden ist und den wenigstens einen Steuerbefehl (1) für das Betriebsgerät (EVG) erzeugt.

4. Verfahren nach Anspruch 3, **dadurch gekennzeichnet, daß** der Istwert (3) des mindestens einen Betriebsparameters der externen Prozeßsteuerungsvorrichtung (P) zugeführt wird.

5. Verfahren nach Anspruch 4, **dadurch gekennzeichnet, daß** der Sollwert des mindestens einen Betriebsparameters von der externen Prozeßsteuerungsvorrichtung (P) bereitgestellt wird.

6. Verfahren nach Anspruch 5, **dadurch gekennzeichnet, daß** der Soll-Istwertvergleich von der externen Prozeßsteuerungsvorrichtung (P) durchgeführt wird.

7. Verfahren nach Anspruch 1, **dadurch gekennzeichnet, daß** der Istwert (3) des mindestens einen Betriebsparameters dem Mikrocontroller (MC) zugeführt wird.

8. Verfahren nach Anspruch 7, **dadurch gekennzeichnet, daß** der Sollwert (6) des mindestens einen Betriebsparameters dem Mikrocontroller (MC) zugeführt wird oder vom Mikrocontroller (MC) bereitgestellt wird.

9. Verfahren nach Anspruch 8, **dadurch gekennzeichnet, daß** der Soll-Istwertvergleich von dem Mikrocontroller (MC) durchgeführt wird.

10. Anwendung des Verfahrens gemäß Anspruch 2 auf ein dimmbares Betriebsgerät, wobei ein erster Betriebsparameter die Ausgangsspannung oder Ausgangsleistung des Betriebsgerätes (EVG) bei minimaler und ein zweiter Betriebsparameter die Ausgangsspannung oder Ausgangsleistung des Betriebsgerätes (EVG) bei maximaler Dimm-Einstellung ist.

## Claims

1. Method for adjusting at least one operating parameter of an operating unit for electric lamps, the operating unit (EVG) having a voltage transformer (WR) with at least one load circuit (LD, C) connected thereto, a microcontroller (MC) for driving the voltage transformer (WR), and terminals (j1, j2) for at least one lamp, and the method having the following steps:
a) transmitting at least one control command (1) to the operating unit (EVG), which causes the operating unit (EVG) to set a specific operating state, and which starts the adjusting method for the at least one operating parameter,
b) detecting the actual value (3) of the at least one operating parameter,
c) comparing the actual value (3) of the at least one operating parameter with a prescribed desired value (6) of the at least one operating parameter,
d) determining and storing a correction value or desired value (5), dependent on the desired value/actual value comparison, for at least one drive parameter, which is stored in the operating unit and determines the driving of the voltage transformer (WR),
e) driving the voltage transformer (WR) by using the determined correction value or desired value (5), stored in the operating unit (EVG), of the drive parameter,
**characterized in that** during the method the operating unit (EVC) is operated with a calibrated load which is connected into the load circuit (LD, C) and is connected to the terminals (j1, j2), and steps b) to e) are repeated if the actual value (3) of the at least one operating parameter deviates from its desired value (6) by more than a prescribed absolute value.

2. Method according to Claim 1, **characterized in that** the at least one operating parameter is the output voltage or output power provided at the terminals (j1, j2) of the operating unit (EVG).

3. Method according to Claim 1, **characterized in that** the method is carried out with the aid of an external process control device (P) which is connected to the microcontroller (MC) via an external interface of the operating unit (EVG) during the adjusting method, and generates the at least one control command (1) for the operating unit (EVG).

4. Method according to Claim 3, **characterized in that** the actual value (3) of the at least one operating parameter is fed to the external process control device (P).

5. Method according to Claim 4, **characterized in that** the desired value of the at least one operating parameter is provided by the external process control device (P).

6. Method according to Claim 5, **characterized in that** the desired value/actual value comparison is carried out by the external process control device (P).

7. Method according to Claim 1, **characterized in that** the actual value (3) of the at least one operating parameter is fed to the microcontroller (MC).

8. Method according to Claim 7, **characterized in that** the desired value (6) of the at least one operating parameter is fed to the microcontroller (MC) or is provided by the microcontroller (MC).

9. Method according to Claim 8, **characterized in that** the desired value/actual value comparison is carried out by the microcontroller (MC).

10. Application of the method according to Claim 2 to a dimmable operating unit, a first operating parameter being the output voltage or output power of the operating unit (EVG) in the case of a minimum dimming setting, and a second operating parameter being the output voltage or output power of the operating unit (EVG) in the case of a maximum dimming setting.

## Revendications

1. Procédé pour l'équilibrage d'au moins un paramètre de fonctionnement d'un appareil de contrôle destiné à faire fonctionner des lampes électriques, l'appareil de contrôle (EVG) comportant un convertisseur de tension (WR) avec au moins un circuit de charge (LD, C) raccordé à celui-ci, un microcontrôleur (MC) pour la commande du convertisseur de tension (WR) et des bornes (j1, j2) pour au moins une lampe, et dans lequel le procédé comporte les étapes suivantes :
a) émission d'au moins une instruction de commande (1) vers l'appareil de contrôle (EVG), laquelle instruction de commande impose à cet appareil de contrôle (EVG) de régler un certain état de fonctionnement et démarre le procédé d'équilibrage pour le ou les paramètres de fonctionnement,
b) détection de la valeur réelle (3) du ou des paramètres de fonctionnement,
c) comparaison de la valeur réelle (3) du ou des paramètres de fonctionnement à une valeur de consigne (6) prédéterminée du ou des paramètres de fonctionnement,
d) détermination et mémorisation d'une valeur de correction ou valeur de consigne (5) dépendant de la comparaison entre valeur de consigne et valeur réelle pour au moins un paramètre de commande mémorisé dans l'appareil de contrôle et déterminant la commande du convertisseur de tension (WR),
e) commande du convertisseur de tension (WR) en utilisant la valeur de correction ou valeur de consigne (5), déterminée et mémorisée dans l'appareil de contrôle (EVG), du paramètre de commande,
**caractérisé par le fait que**, pendant le procédé, on fait fonctionner l'appareil de contrôle (EVG) avec une charge calibrée branchée dans le circuit de charge (LD, C) et raccordée aux bornes (j1, j2) et on répète les étapes b) à e) si la valeur réelle (3) du ou des paramètres de fonctionnement s'écarte de sa valeur de consigne (6) de plus d'une valeur absolue prédéterminée.

2. Procédé selon la revendication 1, **caractérisé par le fait que** le ou les paramètres de fonctionnement sont la tension de sortie ou la puissance de sortie fournie aux bornes (j1, j2) de l'appareil de contrôle (EVG).

3. Procédé selon la revendication 1, **caractérisé par le fait que** le procédé est mis en oeuvre à l'aide d'un dispositif de commande de processus externe (P) qui est relié au microcontrôleur (MC) par l'intermédiaire d'une interface externe de l'appareil de contrôle (EVG) pendant le procédé d'équilibrage et qui produit la ou les instructions de commande (1) pour l'appareil de contrôle (EVG).

4. Procédé selon la revendication 3, **caractérisé par le fait que** la valeur réelle (3) du ou des paramètres de fonctionnement est envoyée au dispositif de commande de processus externe (P).

5. Procédé selon la revendication 4, **caractérisé par le fait que** la valeur de consigne du ou des paramètres de fonctionnement est fournie par le dispositif de commande de processus externe (P).

6. Procédé selon la revendication 5, **caractérisé par le fait que** la comparaison entre valeur de consigne et valeur réelle est effectuée par le dispositif de commande de processus externe (P).

7. Procédé selon la revendication 1, **caractérisé par le fait que** la valeur réelle (3) du ou des paramètres de fonctionnement est envoyée au microcontrôleur (MC).

8. Procédé selon la revendication 7, **caractérisé par le fait que** la valeur de consigne (6) du ou des paramètres de fonctionnement est envoyée au microcontrôleur (MC) ou est fournie par le microcontrôleur (MC).

9. Procédé selon la revendication 8, **caractérisé par le fait que** la comparaison entre valeur de consigne et valeur réelle est effectuée par le microcontrôleur (MC).

10. Application du procédé selon la revendication 2 à un appareil de contrôle variateur, un premier paramètre de fonctionnement étant la tension de sortie ou la puissance de sortie de l'appareil de contrôle (EVG) pour un réglage de variation minimal et un deuxième paramètre de fonctionnement étant la tension de sortie ou la puissance de sortie de l'appareil de contrôle (EVG) pour un réglage de variation maximal.
